# EUROPEAN PATENT SPECIFICATION

(11) **EP 3 235 115 B1**
(45) Date of publication and mention of the grant of the patent: **22.04.2020**
(21) Application number: 15797541.8
(22) Date of filing: 08.11.2015
(51) Int. Cl.: H02M 3/158, B23K 9/10, H02M 1/42

(54) **METHOD AND APPARATUS FOR PROVIDING WELDING AND AUXILIARY POWER**
VERFAHREN UND VORRICHTUNG ZUR BEREITSTELLUNG VON SCHWEISS- UND HILFSSTROM
PROCÉDÉ ET APPAREIL PERMETTANT D'OBTENIR UNE PUISSANCE AUXILIAIRE ET DE SOUDAGE

(30) Priority: 19.12.2014 US 201414576875
(43) Date of publication of application: 25.10.2017
(73) Proprietor: Illinois Tool Works Inc., Glenview, IL 60025 (US)
(72) Inventor: MADSEN, Michael D., Glenview, Illinois 60025 (US)
(74) Representative: Trinks, Ole
(86) International application number: PCT/US2015/059645
(87) International publication number: WO 2016/099701

(56) References cited:
- GB-A- 2 258 958
- US-A1- 2007 051 712
- US-B2- 6 987 242

## Description

### FIELD OF THE INVENTION

The present disclosure relates generally to the art of welding type power supplies that include a welding type power circuit and an auxiliary power circuit.

### BACKGROUND OF THE INVENTION

There are many known types of welding-type power supplies. Welding-type power, as used herein, refers to power suitable for electric arc welding, plasma cutting or induction heating. Welding-type systems are often used in a variety of applications and often include an auxiliary output to mimic utility power for powering tools, lights, etc. Welding-type system, as used herein, is a system that can provide welding type power, and can include control and power circuitry, wire feeders, and ancillary equipment. Utility power, as used herein, is power provided at a voltage and frequency by an electric utility.

Providing welding-type power, and designing systems to provide welding type power, provides for some unique challenges. For example, power supplies for most fields are dedicated to a single input and single output, or are rarely moved from one input to another. But, welding type systems will often be moved from one location to another, and be used with different inputs, such as single or three phase, or 115V, 230V, 460V, 575V, etc., or 50hz or 60hz signals, and be required to provide welding power and auxiliary power. Power supplies that are designed for a single input cannot provide a consistent output across different input voltages, and components in these power supplies that operate safely at a particular input level can be damaged when operating at an alternative input level. Also, power supplies for most fields are designed for relatively steady loads. Welding, on the other hand, is a very dynamic process and numerous variables affect output current and load, such as arc length, electrode type, shield type, air currents, dirt on the work piece, puddle size, weld orientation, operator technique, and lastly the type of welding process determined to be most suitable for the application. These variables constantly change, and lead to a constantly changing and unpredictable output current and voltage. Moreover, welding systems should provide auxiliary power at a constant and steady ac voltage, to properly mimic utility power. Finally, power supplies for many fields are designed for low-power outputs. Welding-type power supplies are high power and present many problems, such as switching losses, line losses, heat damage, inductive losses, and the creation of electromagnetic interference. Accordingly, welding-type power supply designers face many unique challenges.

Welding systems are often used in places where utility power is not available, and include an engine and generator to provide the power for conversion by the power circuitry. However, given the dynamic load of welding, it is challenging to match the power generated to the power consumed by the welding and auxiliary operations.

One prior art welding power supply that is well suited for portability and for receiving different input voltages is a multi-stage system with a preregulator to condition the input power and provide a stable bus, and an output circuit that converts or transforms the stable bus to a welding-type output. Examples of such welding-type systems are described in USP 7049546 (Thommes) and USP 6987242 (Geissler), and US Patent Publication 20090230941 (Vogel), all three of which are owned by the owner of this invention, and hereby incorporate by reference. Miller® welders with the Autoline® feature include some of the features of this prior art.

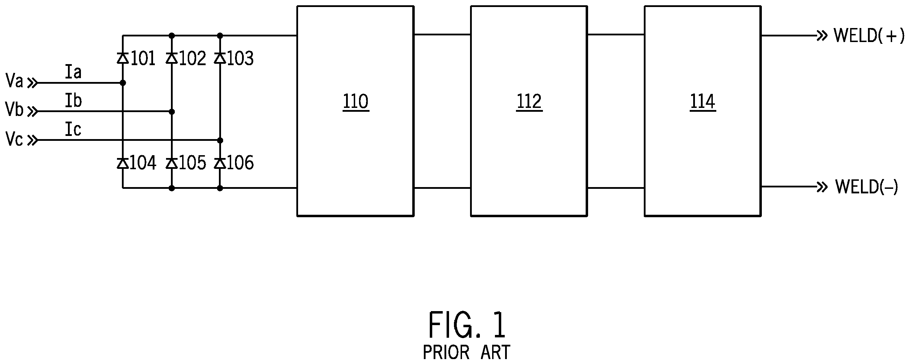

Figure 1 shows a prior art three-phase welding-type power supply consistent with USPs 7049546 and 6987242 and US Patent Publication 20090230941, and receives the three phase input Va, Vb and Vc on an input rectifier consisting of diodes 101-106. The rectified input is provided to a boost circuit 110, which boosts the input to a desired voltage (800V, e.g.) on a boosted or intermediate bus. Boost circuit 110 can include power factor correction, if desired. The boosted or intermediate bus is provided to a dc bus filter 112 (the bulk capacitance on the dc bus), and then to an isolated dc-dc converter 114. The dc-dc converter can include a converter (inverter, flyback, buck, etc), transformer and rectifier. The dc output is welding-type power. Such systems are significantly better than the prior art before them, and were the first welding-type systems to be "universal" in that they could accept nearly all available input power. They were also relatively portable and had improved power factors.

The total power processed by such prior art systems is processed by a single power converter. Thus the power switch or input disconnecting device must be designed for the total power supply input current. Also parasitic inductances are increased by commonly used power semiconductor modules and by packaging constraints of physically larger components. These inductances are excited with higher switching currents, resulting in lower practical switching frequencies. Increased power dissipation is typically concentrated within larger individual components. This compromises the efficiency of the thermal design by localizing heat sources to relatively small spaces within the total volume of the power supply. Thus, prior art boost power circuits are limited by the power and thermal limitations of the switches used.

Prior art welding-type systems often provide auxiliary power outputs to power tools, etc. Auxiliary output power, as used herein includes, power provided to mimic utility power, such as 50/60 Hz, 120/240/200V, e.g., that can be used to power devices such as tools, lights, etc. USP 6987242 describes system where auxiliary power is derived using a buck converter. While such a system is light weight and efficient, it does not provide split phase power, as do utility systems. A further prior art welding-type power supply is disclosed in GB 2 258 958 A and discloses a welding-type power supply, comprising: an input circuit, disposed to receive input power and provide a rectified input; a dual boost preregulator disposed to receive the rectified input; a welding-type output power circuit disposed to receive power and provide welding-type output power; and a controller connected to control the dual boost preregulator, wherein the controller is connected to control the welding-type output power circuit.

Accordingly, a welding-type system that maintains the advantages of prior art portable, universal input systems, but also avoids some of the deficiencies of the prior art is desired.

### SUMMARY OF THE PRESENT INVENTION

The invention refers to a welding-type power supply according to claim 1 and a method of providing welding-type power according to claim 8. Preferred embodiments are defined in the dependent claims.

According to a first aspect of the disclosure a welding-type power system includes an input circuit, a dual boost preregulator, a welding-type output power circuit, and a controller. The input circuit receives input power and provide a rectified input to the dual boost preregulator. The preregulator regulates the input and provides bus power across a positive bus and a negative bus. The welding-type output power circuit receives power from the bus and provides to welding-type output power. The controller controls the dual boost preregulator and the welding-type output power circuit.

According to a second aspect of the invention a method of providing welding-type power includes receiving input power and deriving rectified power from the input power. Then, boosting the rectified power and providing intermediate power to a positive bus and a negative bus by controlling a dual boost circuit. Welding-type output power is derived from the positive bus and the negative bus and provided a welding-type output. The derivation of providing the welding-type power on a welding-type output is controlled in response to a welding demand for the welding-type output power.

The dual boost preregulator includes at least two controllable boost switches, at least two boost inductors, and at least a positive bus capacitors and a negative bus capacitor, in one alternative.

The positive bus capacitors is connected to the positive bus and a common neutral, and the negative bus capacitor is connected to the negative bus and the common neutral, in other alternatives.

The positive and negative bus are common buses, and the system includes an auxiliary power circuit that receives power from the common busses and provides non-isolated auxiliary output power in another alternative. The controller can control the auxiliary power circuit.

In other another embodiments an engine provides motive power, and a generator receives the motive power and provides the input power. The engine may be variable speed and the generator may be a variable frequency and/or variable voltage generator. The engine and generator may be controlled by the controller.

The auxiliary power circuit provides a split-phase output in yet another embodiment.

In various embodiments the engine speed and/or the generator frequency is controlled in response to at the a demand for the auxiliary power and/or the welding power demand.

Other principal features and advantages of will become apparent to those skilled in the art upon review of the following drawings, the detailed description and the appended claims.

### BRIEF DESCRIPTION OF THE DRAWINGS

Figure 1 is a prior art welding power circuit;
Figure 2 is a block diagram of the preferred embodiment; and
Figure 3 is a circuit diagram of portions of the preferred embodiment.

Before explaining at least one embodiment in detail it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting. Like reference numerals are used to indicate like components.

### DETAILED DESCRIPTION OF THE PREFERRED EMBODIMENTS

While the present disclosure will be illustrated with reference to a particular welding type system having particular circuitry, it should be understood at the outset that the invention can also be implemented with other systems and other circuitry.

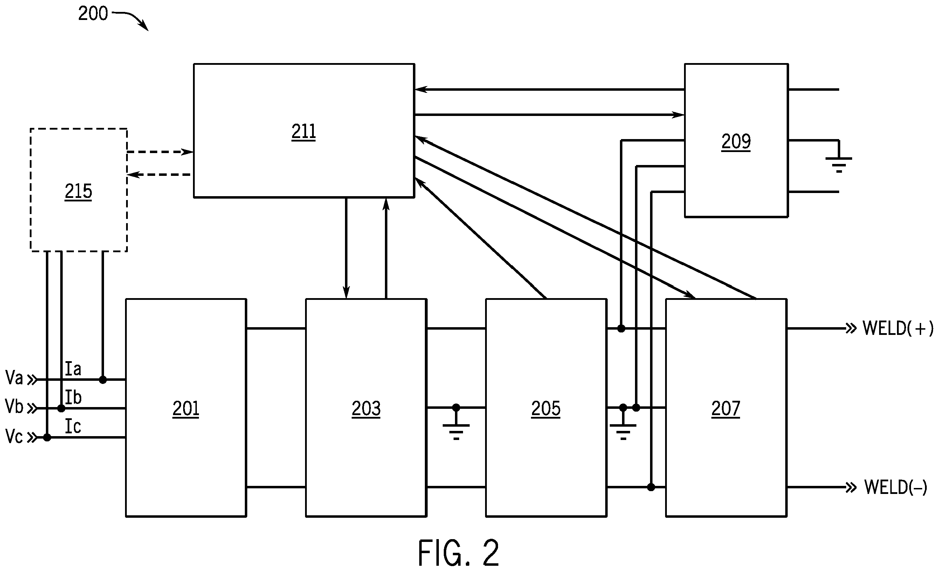

Figure 2 shows a block diagram of a welding-type system 200 that implements the preferred embodiment. System 200 includes an input circuit 201 that receives input power. Input circuit 201 may be implemented using an input rectifier, such as that known in the prior art. The input power is preferably form a variable speed engine and a varibale frequency generator, but can be utility or generator power, single or three phase, and any voltage within a wide range of voltages. Alternatives provide for receiving a dc input which input circuit 201 can filter and pass through. Input circuit, as used herein, includes circuits configured to receive an ac input signal and to provide a dc output signal and may include as part thereof a rectifier, a transformer, a saturable reactor, a converter, an inverter, a filter, and/or a magnetic amplifier.

System 200 also includes a preregulator 203 that receives the power signal from input circuit 201. Preregulator as used herein, includes circuitry such as rectifiers, switches, transformers, SCRs, etc. that process input power and/or software, control circuitry feedback circuitry, communication circuitry, and other ancillary circuitry associated therewith. The preferred embodiment provides that preregulator 203 is a dual boost circuit preregulator. Dual boost circuit preregulator, as used herein includes, is a circuit that receives an input and provides two boosted outputs, one across a common and positive bus, and the other across the common and a negative bus. Common bus, as used herein includes, a bus that is used to power multiple parallel outputs. Preregulator 203, can be implemented with a split boost circuit. Split boost circuit, as used herein includes, a boosting circuit with two switches (or groups of switches) that control charging of two unparalleled capacitors, and a fixed bus is provided across the two capacitors.

Preregulator 203 (which will be described in more detail below) receives the rectified power from input circuit 201 and boosts the signal to provides a boosted split bus. The preferred embodiment provides that preregulator 203 includes two boost inductors and two boost switches. Boost inductor, as used herein, is an inductor used in a circuit that boosts a voltage. Preregulator 203 also can provide power factor correction by proper timing of the boost switches. Alternatives provide for a single boost circuit, or other topologies such as buck converters, cuk converters, inverters etc.

Preregulator 203 is controlled by a controller 211. Controller 211 includes the logic circuitry or chip that determines when the boost switches in preregulator 203 are turned turn on and off to produce the desired output voltage and/or power factor correction. Controller, as used herein, includes digital and analog circuitry, discrete or integrated circuitry, microprocessors, DSPs, FPGAs, etc., and software, hardware and firmware, located on one or more boards, used to control all or part of a welding-type system or a device such as a power supply, power source, engine or generator. Controller 211 receives feedback signals from preregulator 203, such as input current, out voltage, etc.

The output of preregulator is provided to a dc bus filter 205 (the bulk capacitance on the dc bus). Feedback from filter 205 is provided to controller 211 and can be used to insure that the bus is at its desired level, and to determine if the split bus is balanced.

The split, filtered dc bus is provided to an output converter 207 and to an auxiliary power circuit 209. Auxiliary power circuit, as used herein includes, circuitry used to provide auxiliary output power.

Output converter 207 may be a single or multi-stage output circuit, and can include inverters, converters, transformers, etc. Output converter 207 is a welding-type power output circuit. Welding-type output power circuit, as used herein includes, the circuitry used to deliver welding-type power to the output studs. Converter 207 receives the split dc bus, and provides a welding-type output. The preferred embodiment provides that converter 207 be implemented using a pulse width modulated inverter, a transformer and a rectifier, to provide the desired output waveform and to provide isolation between the welding output and the input. Such a converter output is described in detail in the prior art discussed above. Other topologies may be used if desired. For example, a chopper or buck converter is often used as an output circuit in welding-type power supplies. Also, a second inverter can be used to provide an ac output. Converter 207 provides feedback signals to and receives control signals from controller 211.

Auxiliary power circuit 209 is implemented in the preferred embodiment using two half-bridge inverters. Each inverter provides a 115VAC 60 Hz output, and together they provide a split phase AC output such as that provided by utility power. The ac aux outputs create a 230VAC aux power output across the two non-common outputs. Thus, the preferred embodiment provides that split phase ac aux power is provided, to more closely mimic utility power, and to provide both 115 and 230VAC aux power. Other embodiments provide for other outputs, such as 200/400V, 230/460V, or 50 Hz.

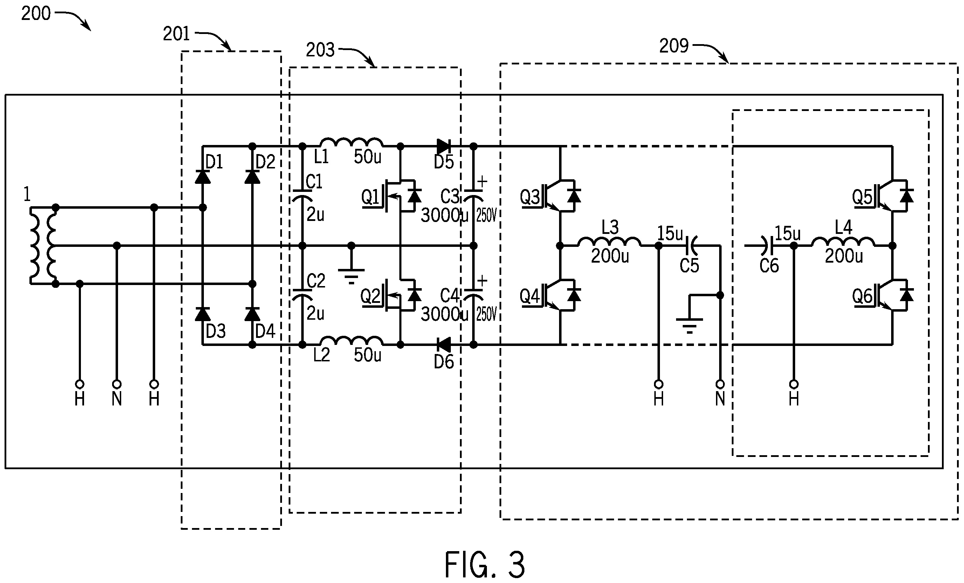

Figure 3 is a circuit diagram showing more detail for portions of welding-type system 200, including input circuit 201, preregulator 203, dc bus filter 205, and auxiliary power circuit 209. Welding type system 200 receives as an input single phase power. Alternatives provide for a three phase input, and one skilled in the art can configure system 200 to receive 3 phase power. The power may be from a utility source, or from an engine/generator 215 (shown in Figure 2). Preferably generator 215 provides 10KW of power at 3600 RPM. A 230VAC signal may be provide from generator 215 on the H, N, and H connections on Figure 3. Engine/generator 215 preferably includes a variable speed engine, and the speed is preferably controlled by controller 215 in response to the power demand of system 200. Engine/generator 215 preferably includes a variable frequency generator, and the frequency is controlled by controller 215. Alternatives provide for a controller that is part of and unique to engine/generator 215, and/or a multi-speed or single speed engine and a constant frequency generator and/or variable voltage generator.

The input is rectified by input circuit 201, which includes diodes D1-D4, in the preferred embodiment. The rectified DC signal from input circuit 201 is provided to filter capacitors C1 and C2 (preferably 2µF), and then to preregulator 203. Capacitors C1 and C2 prevent ripple from being injected into the input. Preregulator 203 is a dual split boost and includes boost inductors L1 and L2 (preferably 50 µH) and switches Q1 and Q2. Switches Q and Q2 are controlled by controller 211 to provide a desired bus voltage and, preferably, power factor correction.

The output of preregulator 203 is provided through diodes D5 and D6 across bus capacitors C3 and C4 (preferably 3000µF and rated for 250V). The common node of capacitors C4 and C5 is neutral, thus the output is a split bus. The bus is provided to the welding output converter 207 (Figure 2) and to auxiliary power circuit 209.

Auxiliary power circuit 209is comprised of, in the preferred embodiment, two 20KHz half bridge inverters. Each inverter is comprised of two switches (Q3, Q4 and Q5,Q6, preferably IGBTs or FETs), an inductor (L3 and L4, preferably 200µH), and a capacitor C5, C6 (preferably 15µF). Each inverters output is provide across a unique hot output and a common neutral output. The inverters are pulse width modulated by controller 211 to provide a 115VAC sinusoidal output, and are 180 degrees out of phase from one another to provide a split phase auxiliary power output. Thus, the output of each inverter mimics a 115V utility signal, and combined they mimic a 230VAC utility signal. The output is a non-isolated auxiliary output.

Alternatives provide for using other topologies (full bridge, etc.), and for providing only a single auxiliary power circuit, without split phase power, or for independently or not independently regulating the inverters.

It should be apparent that there has been provided a method and apparatus for providing welding and auxiliary power that fully satisfies the objectives and advantages set forth above.

## Claims

1. A welding-type power supply, comprising:
- an input circuit (201), disposed to receive input power and provide a rectified input;
- a dual boost preregulator (203) disposed to receive the rectified input;
- a welding-type output power circuit (207) disposed to receive power from a positive bus and a negative bus and provide welding-type output power; and
- a controller (211) connected to control the dual boost preregulator (203);
wherein the controller (211) is connected to control the welding-type output power circuit (207), and the dual boost preregulator (203) provides bus power to the positive bus and the negative bus.

2. The welding-type power supply of claim 1,
wherein the dual boost preregulator (203) includes at least two controllable boost switches (Q1, Q2), at least two boost inductors (L1 L2), and at least a positive bus capacitor and a negative bus capacitor (C1, C2).

3. The welding-type power supply of claim 2,
wherein the positive bus capacitor is connected to the positive bus and a common neutral, and the negative bus capacitor is connected to the negative bus and the common neutral.

4. The welding-type power supply of one of the preceding claims,
wherein the positive and negative bus are common busses, and further comprising an auxiliary power circuit (209), disposed to receive power from the common busses and to provide non-isolated auxiliary output power, wherein the controller (211) is further connected to control the auxiliary power circuit (209).

5. The welding-type power supply of one of the preceding claims, further comprising an engine (215) that provides motive power, and a generator that receives the motive power and provides the input power, wherein the engine (215) is a variable speed engine, and wherein the controller (211) is connected to control the speed of the variable speed engine.

6. The welding-type power supply of claim 5,
wherein the generator is a variable frequency generator and wherein the controller (211) is connected to control the frequency of the variable frequency generator.

7. The welding-type power supply of one of claims 4 to 6,
wherein the auxiliary power circuit (209) provides a split-phase output.

8. A method of providing welding-type power, comprising:
- receiving input power;
- deriving rectified power from the input power;
- boosting the rectified power;
- providing the welding-type power on a welding-type output;
- providing intermediate power to a positive bus and a negative bus by controlling a dual boost circuit;
- deriving welding-type output power from the positive bus and the negative bus;
- controlling the deriving of welding-type output power in response to a welding demand for the welding-type output power.

9. The method of claim 8,
wherein controlling a dual boost circuit includes controlling at least two controllable boost switches, thereby controlling current flow through at least two boost inductors, a positive bus capacitor, and a negative bus capacitor.

10. The method of claim 8 or 9,
wherein providing intermediate power includes providing intermediate power across the positive bus and a common neutral, and providing intermediate power across the negative bus and the common neutral.

11. The method of one of claims 8 to 10,
wherein providing intermediate power includes providing intermediate power to common busses, and further comprising deriving an auxiliary power from the common busses to provide an auxiliary output power.

12. The method of one of claims 8 to 11,
further comprising providing motive power to a generator and generating the input power with the generator.

13. The method of claim 12,
wherein providing motive power includes controlling the speed of a variable speed engine (215) in response to at least one of a demand for the auxiliary power and the welding demand.

14. The method of claim 13,
wherein generating the input power includes generating the input power at a variable frequency in response to at least one of the demand for the auxiliary power and the welding demand.

15. The method of one of claims 11 to 14,
wherein providing the auxiliary output power includes providing a non-isolated split-phase output.

## Patentansprüche

1. Schweißausführung-Leistungsversorgung, umfassend:
- eine Eingangsschaltung (201), angeordnet zum Empfangen von Eingangsleistung und Bereitstellen eines gleichgerichteten Eingangs;
- einen Doppelverstärkungsvorregler (203), angeordnet zum Empfangen des gleichgerichteten Eingangs;
- eine Schweißausführung-Ausgangsleistungsschaltung (207), angeordnet zum Empfangen von Leistung von einem positiven Bus und einem negativen Bus und Bereitstellen von Schweißausführung-Ausgangsleistung; und
- eine Steuerung (211), verbunden zum Steuern des Doppelverstärkungsvorreglers (203);
wobei die Steuerung (211) verbunden ist zum Steuern der Schweißausführung-Ausgangsleistungsschaltung (207) und der Doppelverstärkungsvorregler (203) dem positiven Bus und dem negativen Bus Busleistung bereitstellt.

2. Schweißausführung-Leistungsversorgung nach Anspruch 1,
wobei der Doppelverstärkungsvorregler (203) mindestens zwei steuerbare Verstärkungsschalter (Q1, Q2), mindestens zwei Verstärkungsinduktoren (L1, L2) und mindestens einen positiven Buskondensator und einen negativen Buskondensator (C1, C2) enthält.

3. Schweißausführung-Leistungsversorgung nach Anspruch 2,
wobei der positive Buskondensator mit dem positiven Bus und einem gemeinsamen Neutralleiter verbunden ist und der negative Buskondensator mit dem negativen Bus und dem gemeinsamen Neutralleiter verbunden ist.

4. Schweißausführung-Leistungsversorgung nach einem der vorstehenden Ansprüche,
wobei der positive und der negative Bus gemeinsame Busse sind, und ferner umfassend eine Hilfsleistungsschaltung (209), angeordnet zum Empfangen von Leistung von den gemeinsamen Bussen und zum Bereitstellen nicht isolierter Hilfsausgangsleistung, wobei die Steuerung (211) ferner verbunden ist, die Hilfsleistungsschaltung (20) zu steuern.

5. Schweißausführung-Leistungsversorgung nach einem der vorstehenden Ansprüche,
ferner umfassend eine Maschine (215), die Bewegungsleistung bereitstellt, und einen Generator, der die Bewegungsleistung empfängt und die Eingangsleistung bereitstellt, wobei die Maschine (215) eine Maschine variabler Drehzahl ist und wobei die Steuerung (211) verbunden ist, die Drehzahl der Maschine variabler Drehzahl zu steuern.

6. Schweißausführung-Leistungsversorgung nach Anspruch 5,
wobei der Generator ein Generator variabler Frequenz ist und wobei die Steuerung (211) verbunden ist, die Frequenz des Generators variabler Frequenz zu steuern.

7. Schweißausführung-Leistungsversorgung nach einem der Ansprüche 4 bis 6,
wobei die Hilfsleistungsschaltung (209) einen Spaltphasenausgang bereitstellt.

8. Verfahren zum Bereitstellen von Schweißausführung-Leistung, umfassend:
- Empfangen von Eingangsleistung;
- Ableiten von gleichgerichteter Leistung aus der Eingangsleistung;
- Verstärken der gleichgerichteten Leistung;
- Bereitstellen der Schweißausführung-Leistung an einem Schweißausführung-Ausgang;
- Bereitstellen von zwischenliegender Leistung einem positiven Bus und einem negativen Bus durch Steuern einer Doppelverstärkungsschaltung;
- Ableiten von Schweißausführung-Ausgangsleistung von dem positiven Bus und dem negativen Bus;
- Steuern des Ableitens von Schweißausführung-Ausgangsleistung als Reaktion auf eine Schweißanforderung der Schweißausführung-Ausgangsleistung.

9. Verfahren nach Anspruch 8,
wobei Steuern einer Doppelverstärkungsschaltung enthält, mindestens zwei steuerbare Verstärkungsschalter zu steuern, wodurch Stromfluss durch mindestens zwei Verstärkungsinduktoren, einen positiven Buskondensator und einen negativen Buskondensator gesteuert wird.

10. Verfahren nach Anspruch 8 oder 9,
wobei Bereitstellen zwischenliegender Leistung enthält, zwischenliegende Leistung über den positiven Bus und einen gemeinsamen Neutralleiter bereitzustellen und zwischenliegende Leistung über den negativen Bus und den gemeinsamen Neutralleiter bereitzustellen.

11. Verfahren nach einem der Ansprüche 8 bis 10,
wobei Bereitstellen von zwischenliegender Leistung enthält, zwischenliegende Leistung gemeinsamen Bussen bereitzustellen, und ferner umfassend Ableiten einer Hilfsleistung von den gemeinsamen Bussen zum Bereitstellen einer Hilfsausgangsleistung.

12. Verfahren nach einem der Ansprüche 8 bis 11,
ferner umfassend Bereitstellen von Bewegungsleistung einem Generator und Erzeugen der Eingangsleistung mit dem Generator.

13. Verfahren nach Anspruch 12,
wobei Bereitstellen von Bewegungsleistung enthält, die Drehzahl einer Maschine variabler Drehzahl (215) als Reaktion auf mindestens eines einer Anforderung der Hilfsleistung und der Schweißanforderung zu steuern.

14. Verfahren nach Anspruch 13,
wobei Erzeugen der Eingangsleistung enthält, die Eingangsleistung bei einer variablen Frequenz als Reaktion auf mindestens eines der Anforderung der Hilfsleistung und der Schweißanforderung zu erzeugen.

15. Verfahren nach einem der Ansprüche 11 bis 14,
wobei Bereitstellen der Hilfsausgangsleistung enthält, einen nicht isolierten Spaltphasenausgang bereitzustellen.

## Revendications

1. Alimentation électrique de type soudage, comprenant :
- un circuit d'entrée (201), disposé pour recevoir de l'énergie d'entrée et pour fournir une entrée redressée ;
- un prérégulateur de surtension bi-mode (203) disposé pour recevoir l'entrée redressée ;
- un circuit de puissance de sortie de type soudage (207) disposé pour recevoir de l'énergie d'un bus positif et d'un bus négatif et pour fournir une puissance de sortie de type soudage ; et
- un dispositif de commande (211) connecté pour commander le prérégulateur de surtension bi-mode (203) ;
dans laquelle le dispositif de commande (211) est connecté pour commander le circuit de puissance de sortie de type soudage (207), et le prérégulateur de surtension bi-mode (203) fournit de l'énergie de bus au bus positif et au bus négatif.

2. Alimentation électrique de type soudage selon la revendication 1, dans laquelle le prérégulateur de surtension bi-mode (203) comprend au moins deux commutateurs de surtension réglables (Q1, Q2), au moins deux bobines d'inductance de surtension (L1, L2), et au moins un condensateur de bus positif et un condensateur de bus négatif (C1, C2).

3. Alimentation électrique de type soudage selon la revendication 2, dans laquelle le condensateur de bus positif est connecté au bus positif et à un conducteur neutre commun, et le condensateur de bus négatif est connecté au bus négatif et au conducteur neutre commun.

4. Alimentation électrique de type soudage selon l'une quelconque des revendications précédentes, dans laquelle les bus positif et négatif sont des bus communs, et comprennent en outre un circuit de puissance auxiliaire (209), disposé pour recevoir de l'énergie des bus communs et pour fournir de la puissance de sortie auxiliaire non isolée, le dispositif de commande (211) étant en outre connecté pour commander le circuit de puissance auxiliaire (209) .

5. Alimentation électrique de type soudage selon l'une quelconque des revendications précédentes, comprenant en outre un moteur (215) qui fournit de la force motrice, et un générateur qui reçoit la force motrice et fournit l'énergie d'entrée, le moteur (215) étant un moteur à vitesse variable, et le dispositif de commande (211) étant connecté pour commander la vitesse du moteur à vitesse variable.

6. Alimentation électrique de type soudage selon la revendication 5, dans laquelle le générateur est un générateur à fréquence variable et le dispositif de commande (211) est connecté pour commander la fréquence du générateur de fréquence variable.

7. Alimentation électrique de type soudage selon l'une quelconque des revendications 4 à 6, dans laquelle le circuit de puissance auxiliaire (209) fournit une sortie bi-mode.

8. Procédé permettant de fournir de la puissance de type soudage, comprenant les étapes consistant à :
- recevoir de l'énergie d'entrée ;
- dériver de l'énergie redressée de l'énergie d'entrée ;
- amplifier l'énergie redressée ;
- fournir la puissance de type soudage au niveau d'une sortie de type soudage ;
- fournir de l'énergie intermédiaire à un bus positif et à un bus négatif en commandant un circuit de surtension bi-mode ;
- dériver de la puissance de sortie de type soudage du bus positif et du bus négatif ;
- commander la dérivation de la puissance de sortie de type soudage en réponse à une demande de type soudage pour la puissance de sortie de type soudage.

9. Procédé selon la revendication 8, dans lequel la commande d'un circuit de surtension bi-mode comprend la commande d'au moins deux commutateurs de surtension réglables, commandant ainsi une circulation de courant à travers au moins deux bobines d'inductance de surtension, un condensateur de bus positif et un condensateur de bus négatif.

10. Procédé selon la revendication 8 ou 9, dans lequel la fourniture d'énergie intermédiaire comprend la fourniture d'énergie intermédiaire à travers le bus positif et un conducteur neutre commun, et la fourniture d'énergie intermédiaire à travers le bus négatif et le conducteur neutre commun.

11. Procédé selon l'une quelconque des revendications 8 à 10, dans lequel la fourniture d'énergie intermédiaire comprend la fourniture d'énergie intermédiaire à des bus communs, et comprend en outre la dérivation d'une puissance auxiliaire à partir des bus communs pour fournir une puissance de sortie auxiliaire.

12. Procédé selon l'une quelconque des revendications 8 à 11, comprenant en outre la fourniture de force motrice à un générateur et la génération de l'énergie d'entrée avec le générateur.

13. Procédé selon la revendication 12, dans lequel la fourniture de force motrice comprend la commande de la vitesse d'un moteur à vitesse variable (215) en réponse à au moins l'une d'une demande de puissance auxiliaire et d'une demande de type soudage.

14. Procédé selon la revendication 13, dans lequel la génération de l'énergie d'entrée comprend la génération de l'énergie d'entrée à une fréquence variable en réponse à au moins l'une de la demande de puissance auxiliaire et de la demande de type soudage.

15. Procédé selon l'une quelconque des revendications 11 à 14, dans lequel la fourniture de la puissance de sortie auxiliaire comprend la fourniture d'une sortie bi-mode non isolée.
